# DEMANDE DE BREVET EUROPEEN

(11) **EP 1 574 544 A1**
(43) Date de publication de la demande: **14.09.2005**
(21) Numéro de dépôt: 05101914.9
(22) Date de dépôt: 11.03.2005
(51) Int. Cl.: C08K 3/08, B65D 65/38, B32B 3/12, E04C 2/54

(54) **Matériau pour la fabrication de plaques opaques, plaques fabriquées avec ce matériau**

(30) Priorité: 12.03.2004 FR 0402621
(71) Demandeur: KAYSERSBERG PACKAGING, 68320 Kunheim (FR)
(72) Inventeur: Coste, Jean-Philippe, 68240, Kaysersberg (FR); Porret, Laurent, 68180, Horbourg-Wihr (FR); Klinger, Yves, 67100, Strasbourg (FR)
(74) Mandataire: David, Daniel

(57) **Abrégé**

La présente invention porte sur un matériau thermoplastique pour la fabrication de produits opaques en forme de feuille ou de plaque caractérisé par le fait qu'il forme un mélange comprenant une résine polyoléfine incorporant une charge minérale et un additif comprenant une charge métallique. De préférence, la résine comprend un copolymère polypropylène-polyéthylène incorporant éventuellement de 8 à 25% de dioxyde de titane, la charge minérale est choisie parmi le dioxyde de titane, le talc ou le carbonate de calcium et la charge métallique est l'aluminium. En particulier, l'additif est un complexe inorganique en quantité comprise entre 0,05 à 0,5% en poids, par exemple de type masterbatch et contenant 50% de particules de dioxyde de titane et d'aluminium.

L'invention porte également sur une plaque pleine ou alvéolaire dont le taux de transmission lumineuse est inférieur à 1% de préférence inférieur à 0,5%. Cette dernière trouve une application comme support d'impression.

## Description

La présente invention porte sur un matériau thermoplastique en polyoléfine pour la fabrication de plaques opaques dont l'opacité est suffisante pour la rendre apte à l'impression recto-verso.

On connaît les plaques alvéolaires ou pleines en matière polyoléfine. Les plaques alvéolaires par exemple sont composées de deux ou plusieurs parois minces parallèles, reliées entre elles par des entretoises longitudinales. Elles sont obtenues notamment par extrusion à travers une filière de forme appropriée suivie d'un calibrage à l'état thermoplastique entre deux plateaux aspirants. Les plaques pleines, après formation, sont soumises à un calandrage pour en contrôler l'épaisseur.

On sait également les rendre opaques par incorporation d'additifs appropriés, tels que des charges minérales, dans le matériau qui les constitue avant extrusion.

Cependant lorsqu'on a besoin de plaques pouvant être imprimées, en particulier pouvant être imprimées recto-verso, on utilise actuellement des plaques en PVC. Il semble que seule cette matière soit reconnue comme offrant un niveau d'opacité suffisant pour cette application.

La demanderesse cherche à éviter l'emploi de matières halogénées pour des raisons de protection de l'environnement et souhaite remplacer dans cette application ce matériau par des résines polyoléfines.

Un premier objectif de l'invention est la mise au point d'un matériau dont la composition chimique permet la réalisation de plaques en résine polyoléfine susceptibles d'être imprimées sur les deux faces.

Lorsqu'on souhaite augmenter l'opacité d'une plaque en résine polyoléfine par incorporation de charges dans la matière extrudée, on est confronté au problème de la modification de son profil de refroidissement en fonction de la concentration des charges ou bien de leur nature. Il en résulte des déformations de la plaque jusqu'à la rendre inutilisable lors de la dépalettisation par margeur sur machine d'impression.

Par ailleurs, les additifs connus ne permettent pas à la connaissance de la demanderesse de parvenir à des plaques en polyoléfine suffisamment blanches, qui est la teinte communément acceptée pour cette application, contrairement au matériau de base en polychlorure de vinyle.

Une autre difficulté d'utilisation des additifs est liée à l'augmentation de la densité du matériau qui se traduit par une élévation du coût du produit.

Enfin les charges classiques, telles que le talc, le carbonate de calcium ou l'oxyde de titane ne permettent pas d'obtenir un niveau d'opacité satisfaisant.

Un autre objectif de la présente est donc la réalisation d'une composition à base de résine polyoléfine et d'additifs opacifiants permettant d'obtenir une plaque opaque présentant une transmission lumineuse inférieure à 1% et de préférence inférieure à 0,5%, tout en lui conférant un aspect blanc et en limitant l'augmentation de la densité par rapport à un matériau sans additif.

Conformément à l'invention on parvient à réaliser ces objectifs avec un matériau thermoplastique, caractérisé par le fait qu'il forme un mélange comprenant une résine polyoléfine incorporant une charge minérale et un additif comprenant une charge métallique, l'additif se présentant sous la forme d'un complexe inorganique en quantité, par rapport au mélange compris entre 0,05 et 0,5 % en poids.

On a en effet constaté avec surprise que le matériau, dans la mesure où il comprend un compound chargé en additif, permet l'obtention de produits opaques adaptés à l'usage recherché. L'effet opacifiant est largement plus marqué qu'avec les résines de l'art antérieur même en les mélangeant avec un additif approprié. En outre le choix de l'additif est déterminant pour l'obtention d'une forte opacité.

De préférence la résine comprend un copolymère Polypropylène-Polyéthylène. En particulier la résine comprend aussi un homopolymère, notamment de 20 à 50% en poids. On peut ainsi adapter son niveau de rigidité à l'usage recherché.

La charge minérale de la résine est avantageusement choisie parmi le dioxyde de titane, le talc et le carbonate de calcium. En particulier, la résine incorpore de 8 à 25% en poids de dioxyde de titane.

La charge métallique de l'additif est de préférence l'aluminium.

Dans une mise en oeuvre particulière, l'additif est de type masterbatch et contient 50% de particules de dioxyde de titane et d'aluminium. Par exemple la base est une polyoléfine.

L'invention porte aussi sur plaque pleine obtenue par extrusion dudit matériau. Elle est d'épaisseur comprise entre 0,25mm et 1,5mm et de préférence comprise entre 0, 35mm et 0,5mm.

L'invention porte également sur une plaque alvéolaire, obtenue par extrusion dudit matériau, comprenant au moins deux couvertures reliées entre elles par des entretoises parallèles, et dont l'épaisseur totale est comprise entre 3 et 10mm pour un grammage compris entre 450 et 2000g/m².

La plaque obtenue présente un taux de transmission lumineuse inférieur à 1% de préférence inférieur à 0,5% ce qui le rend apte à être utilisée comme support d'impression.

L'invention permet aussi d'obtenir une plaque dont la masse volumique est inférieure à 1,4 g/cm³ ce qui le rend particulièrement économique.

On décrit maintenant l'invention plus en détail.

Pour évaluer les solutions de l'art antérieur, on a procédé à un essai de fabrication de plaques pleines à partir d'un matériau 1 de composition à 97% en poids d'un copolymère séquencé polypropylène- polyéthylène et 3% d'un masterbatch blanc à 75% de dioxyde de titane TiO₂.

Le polymère séquencé avait la référence 3660 ou 4660 du fournisseur Atofina. Le masterbatch blanc avait la référence 7002 du fournisseur Vanoplast.

On rappelle qu'un masterbatch ou mélange-maître est une composition à haute concentration de colorant ou pigment que l'on incorpore aux granules de matière plastique avant transformation pour obtenir un produit coloré.

Dans ce cas, la plaque obtenue de 0,35 mm d'épaisseur présentait un taux de transmission lumineuse de 19% seulement.

Pour tous les essais présentés ici on a mesuré le taux de transmission lumineuse à l'aide d'un spectrophotomètre UV-Visible et sphère d'intégration selon la norme ASTM 1003-61 ou DIN 5036.

La masse volumique de la plaque était de 0,94 g/cm³ mesurée selon la norme ISO 1183.

On a essayé d'augmenter l'opacité en doublant le taux de masterbatch à 6% (matériau 2). On a pu réduire le taux de transmission lumineuse à 11% avec une densité de 0,98 g/cm³. Cependant le résultat n'était encore pas satisfaisant car la plaque n'était pas suffisamment opaque pour l'application visée comme support d'impression.

Conformément à l'invention on a préparé un matériau 3 de composition suivante
99,7% d'un compound d'un copolymère polypropylène-polyéthylène chargé à 17% de dioxyde de titane et à 23% de carbonate de calcium et talc.
0,3% d'un masterbatch sur base polyoléfine contenant 50% de particules de dioxyde de titane et d'aluminium.

Par exemple pour le compound on a pris le produit référencé 3EA0238 du fournisseur Ad Majoris, et pour le complexe inorganique le produit Cromofix 50217 du fournisseur Iqap.

On aussi préparé un matériau 4 de composition suivante
99,7% d'un compound de copolymère polypropylène-polyéthylène chargé à 13% de dioxyde de titane.
0,3% du même masterbatch que pour le matériau 3.

Avec ces quatre matériaux on a confectionné des plaques pleines de 0,35mm d'épaisseur. Les résultats en transmission lumineuse et en densité ont été regroupés dans le tableau suivant

| Composition | Matériau 1 | Matériau 2 | Matériau 3 | Matériau 4 | M 3-1 | PVC |
|---|---|---|---|---|---|---|
| Transmission lumineuse (%) | 19 | 11 | 0,1 | 0,1 | 1,6 | 1,5 |
| Masse volumique (g/cm³) | 0,94 | 0,98 | 1,3 | 1,03 | 1,3 | 1,4 |

La composition M3-1 correspond au matériau 3 sans l'additif. On constate que l'on n'obtient pas le taux de transmission lumineuse désiré.

On constate aussi que le matériau 4 convient très bien et répond aux exigences que l'on s'est fixé pour l'application considérée.

Les matériaux de l'invention présentent aussi l'avantage d'avoir si on le souhaite des propriétés mécaniques adaptées. Par exemple, on souhaite rendre leur découpe aisée et préserver l'outillage en terme d'usure. Cela est difficile pour des plaques classiques contenant des charges minérales mais possible pour les plaques de l'invention car il suffit d'ajouter un homopolymère, dont le taux se situe entre 20 et 50%. De préférence on utilise un homopolymère régénéré pour son coût plus faible.

Les propriétés mécaniques ont été mesurées pour une plaque pleine d'épaisseur de 0,35mm. par rapport à des résistances mécaniques en flexion selon la norme ISO 178.

| Composition | Matériau 1 | Matériau 4 |
|---|---|---|
| Module de flexion 10⁻³ (N/mm) | 13,5 | 9,2 |
| Rupture en flexion (N) | 0,30 | 0,23 |

## Revendications

1. Matériau thermoplastique pour la fabrication de produits opaques en forme de feuille ou de plaque **caractérisé par le fait qu'**il forme un mélange comprenant une résine polyoléfine incorporant une charge minérale et un additif comprenant une charge métallique, l'additif étant un complexe inorganique, et en quantité par rapport au mélange compris entre 0,05 et 0,5 % en poids.

2. Matériau selon la revendication 1 dont la résine comprend un copolymère Polypropylène-Polyéthylène.

3. Matériau selon l'une des revendications précédentes dont la résine comprend un homopolymère.

4. Matériau selon la revendication précédente dont la résine comprend de 20 à 50% d'un homopolymère.

5. Matériau selon l'une des revendications 1 ou 2 dont la charge minérale de la résine est choisie parmi le dioxyde de titane, le talc et le carbonate de calcium.

6. Matériau selon la revendication 3 dont la résine incorpore de 8 à 25% de dioxyde de titane.

7. Matériau selon l'une des revendications précédentes dont la charge métallique de l'additif est l'aluminium.

8. Matériau selon la revendication précédente dont l'additif est de type masterbatch contenant 50% de particules de dioxyde de titane et d'aluminium.

9. Plaque pleine, obtenue par extrusion du matériau selon l'une des revendications 1 à 9, d'épaisseur comprise entre 0,25mm et 1,5mm et de préférence comprise entre 0, 35mm et 0,5mm.

10. Plaque alvéolaire, obtenue par extrusion du matériau selon l'une des revendications 1 à 9 comprenant au moins deux couvertures reliées entre elles par des entretoises parallèles, dont l'épaisseur totale est comprise entre 3 et 10mm pour un grammage compris entre 450 et 2000g/m².

11. Plaque obtenue par extrusion d'un matériau selon l'une des revendications 1 à 9 dont le taux de transmission lumineuse est inférieur à 1% de préférence inférieur à 0,5%.

12. Plaque obtenue par extrusion d'un matériau selon l'une des revendications 1 à 9 dont la masse volumique est inférieure à 1,4 g/cm³.
